# EUROPÄISCHE PATENTSCHRIFT

(11) **EP 0 808 227 B1**
(45) Veröffentlichungstag und Bekanntmachung des Hinweises auf die Patenterteilung: **12.04.2000**
(21) Anmeldenummer: 96934175.9
(22) Anmeldetag: 29.10.1996
(51) Int. Cl.: B22F 9/22, C22C 1/04

(54) **VERFAHREN ZUR REDUKTION VON METALLVERBINDUNGEN**
METHOD FOR THE REDUCTION OF METALLIC COMPOUNDS
PROCEDE DE REDUCTION DE COMPOSES METALLIQUES

(30) Priorität: 31.10.1995 AT 179695
(43) Veröffentlichungstag der Anmeldung: 26.11.1997
(73) Patentinhaber: PLANSEE Aktiengesellschaft, 6600 Reutte, Tirol (AT)
(72) Erfinder: KNERINGER, Günter, A-6600 Reutte (AT); KÖCK, Wolfgang, A-6600 Reutte (AT); RESCH, Joachim, A-6600 Reutte (AT)
(74) Vertreter: Lohnert, Wolfgang, Dr.
(86) Internationale Anmeldenummer: AT9600207
(87) Internationale Veröffentlichungsnummer: WO9716275

(56) Entgegenhaltungen:
- EP-A- 0 197 271
- DE-A- 4 127 567
- US-A- 4 859 236
- A.V. Savin "On the Practice and Theory of Reduction of Tungsten Oxides", Izvestiya Rossuskoï Akademii Nauk. Metally, No 4, 1993, S. 22-26. & ISSN Nr 0568-5303, 1993, Allerton Press Inc., N- Y, USA, S. 16-19

## Beschreibung

Die Erfindung betrifft ein Verfahren zur eine oder mehrere Reaktionsstufen umfassenden chemischen Reduktion von pulverförmigen Metallverbindungen, als dem zu reduzierenden Gut, zu Metallpulver oder zu pulverförmigen Verbindungen niedrigerer Oxidationsstufe als vorbestimmtes Endprodukt, in einer temperierbaren Reaktionskammer mit Ein- und Auslaßöffnungen für das zu reduzierende Gut, für das gasförmige reduzierende Medium und wahlweise für Trägergas.
Das Verfahren ist insbesondere geeignet zur Reduktion hochschmelzender Metalloxidpulver zu Metallpulver, z.B. die Reduktion von Wolframoxid zu W, oder auch von Molybdänoxid zu Mo.

Die Herstellung hochschmelzender Metalle und deren Weiterverarbeitung erfolgt bis zum heutigen Tage überwiegend auf pulvermetallurgischem Wege. Dabei hat die Qualität des Metallpulvers, insbesondere die Reinheit und die Kornstruktur, entscheidenden Einfluß auf die Qualität der daraus gefertigten pulvermetallurgischen Produkte.

Daher mißt der Fachmann den Fertigungsstufen der Metallgewinnung, die unmittelbar der Erzeugung des reinen Metallpulvers dienen, seit jeher hohe Bedeutung bei. Es handelt sich dabei vornehmlich um die ein- oder mehrstufige Reduktion von pulverförmigen Metalloxiden hochschmelzender Metalle, z.B. W₄O₁₁ oder MoO₃, zum reinen metallischen Pulver.

Es ist daher bemerkenswert, daß seit Jahrzehnten und bis heute dem Grunde nach unverändert diese Oxide überwiegend in Durchstoßöfen reduziert werden. Dazu werden die Oxidpulver in einer dünnen Lage in tablettartige Keramik- oder Metallschiffchen eingestrichen und während mehrerer Stunden in einer festgelegten Taktfrequenz schrittweise durch einen Hochtemperatur-Durchstoßofen mit Zonen unterschiedlicher Temperatur und unterschiedlichen atmosphärischen Bedingungen geleitet (durchgestoßen). Dabei wird in der Regel Wasserstoffgas als Reduktionsmittel eingesetzt. Die Durchlaufzeiten und damit die Reduktionszeiten liegen bei 10³ - 2 x 10⁴ Sekunden. Der spezifische Durchsatz, gemessen als Tonne zu reduzierendes Gut pro m³ Volumen der Reaktionskammer und Stunde, liegt für Durchstoßöfen bei etwa 0,04.

Ein anderes vorbekanntes, aber in der Praxis weniger verwendetes Verfahren zur Reduzierung derartiger Metallverbindungen ist das sogenannte Drehrohrofenverfahren. Dabei bewegt sich die Schüttung des zu reduzierenden Gutes in einem aus der Horizontale leicht geneigten Drehrohrofen. Die Prozeßabläufe sind denen im Stoßofen vergleichbar. Entsprechend liegen hier die Ofenverweil- bzw. Reduktionszeiten ebenfalls im Bereich 10³ - 10⁴ Sekunden und der spezifische Durchsatz beträgt etwa 0,055 Tonnen pro Kubikmeter und Stunde.

Ein seit langem bekannter Nachteil der beiden genannten Verfahren ist die geringe spezifische Durchsatzmenge an zu reduzierendem Pulver, bezogen auf das benötigte Anlagenvolumen. Ursache für die geringen spezifischen Durchsatzmengen ist der beschränkte Zutritt des Reduktionsgases zur Pulveroberfläche des zu reduzierenden Gutes.

Zur Überwindung der genannten Nachteile von Drehofen und Stoßofen wurde vorgeschlagen, die Reduktion in einem Wirbelschichtofen vorzunehmen. Die zu reduzierende Metallverbindung wird nach diesem Verfahren als Pulverschüttung auf einem Metallrost in einer temperierten Reaktionskammer aufgebracht, wobei das Reduktionsgas, ggf. gemischt mit Trägergas, von unten durch das auf dem Rost befindliche, zu reduzierende Gut hindurchströmt, dabei das Gut aufwirbelt, in eine quasi-fluide Gas-Partikel-Phase bringt und in Kontakt mit demselben zu Metallpulver reduziert (z.B. DE-A-4 127 567). Doch auch nach diesem Verfahren beträgt die Verweilzeit des zu reduzierenden Gutes bis zur ausreichend homogenen Reduktion der Partikel 10² - 10⁴ Sekunden lang in der Reaktionskammer. Entsprechend liegt der spezifische Durchsatz des zu reduzierenden Gutes allenfalls um 1 Zehnerpotenz über dem von Durchstoß- und Drehrohröfen.

Ursache für diese unbefriedigend lange Verweil- bzw. Reaktionszeit sind die teilweise Rückoxidation bereits reduzierter Teilchen in der Schüttung, sowie die unvermeidliche Herausbildung einzelner, zeitlich wechselnder "Kanäle" im Schüttgut, durch die das Gas hindurchströmt, während das Gut in zu diesen Kanälen benachbarten Zonen gar nicht oder nur unvollständig mit Reduktionsgas versorgt und reduziert werden.

Die Veröffentlichung A.V.Savin "On the practive and theory of reduction of tungsten oxides", Izvestiya Rossüskoi Akademii Nauk. Metally, No. 4, S. 22-26, 1993, englische Fassung erschienen unter der Publikations-Nr. ISSN: 0568-5303 1993 im Verlag Allerton Press. Inc., 150 Fifth Av., 10011 New York, USA, befaßt sich mit den metallurgischen Vorgängen und mit der Kinetik der Reduktion von Wolframoxid. Sie nennt in diesem Zusammenhang hilfsweise durchgeführte praktische Laborversuche zur Reduktion von Wolframoxidpulver. Dazu wurde loses Wolframoxidpulver über einen kleinen Trichter von oben in ein vertikales, auf 1.200°C erhitztes Rohr von 250-300 mm Länge eingelassen und durchlief dieses innerhalb 0,25 Sekunden im freien Fall. Im Rohr befand sich reduzierendes Gas, dessen von der Gasströmung ausgehender Einfluß auf die Durchlaufzeit des Pulvers durch das vertikale Rohr außer Acht bleiben konnte. Die Reduktion des Wolframoxides erfolgte mit mäßiger Reduktionsrate, so daß das Verfahren mit ein und demselben Pulver mehrfach wiederholt werden mußte, um Reaktionsdaten zu erhalten, die zur Abstützung der Modelle über die einzelnen Reaktionsvorgänge brauchbar erschienen. In einer alternativen Versuchsanordnung wurde ein Film von WO₃ auf einen Draht aufgebracht, dieser in reduzierende Atmosphäre gebracht und mittels Stromdurchganges etwa 1 Sekunde lang erhitzt, wodurch es zur dort nicht näher quantifizierten Reduktion des Oxides kam.
In der Fachwelt hat sich der Begriff "Zyklon" für eine, der Wirbelschichtkammer äußerlich ähnliche Reaktionskammer zur Durchführung chemischer Stoffreaktionen herausgebildet. Im Unterschied zum Verfahrensablauf in einer Wirbelschichtkammer werden im Zyklon die für eine Reaktion vorgesehenen festen, gasförmigen, vereinzelt auch flüssigen Stoffe, einzeln oder gemeinsam, vielfach vorgemischt und verwirbelt, kontinuierlich in den oberen Bereich der Reaktionskammer mit im ganzen vertikalen Stoffdurchsatz eingeleitet, bzw. in einer vorgegebenen Richtung eingeblasen. Die derart eingebrachten Stoffe bewegen sich unter Wirkung der Gravitations- und der Fliehkraft, sowie entsprechend der Strömungsverhältnisse der Gase im Reaktionsraum. Sie reagieren in der gewünschten Art und Weise und treten, überwiegend am dem Einlaß gegenüberliegenden Ende des Reaktionsraumes, als feste, flüssige oder gasförmige Endstoffe aus der Kammer aus. Gasförmige Endprodukte werden je nach den Strömungsverhältnissen, fallweise am oberen Ende des Reaktionsraumes, ausgelassen.

Allen zyklonartigen Reaktionskammern gemeinsam ist das Entstehen eines Strömungsfeldes des Reaktionsgutes mit axialen, radialen und hohen tangentialen Geschwindigkeiten. In der Regel treten sehr hohe Relativgeschwindigkeiten zwischen Feststoff und Gas auf. Hohe Geschwindigkeits-Gradienten erzeugen hohe Turbulenz-Intensitäten und bewirken damit hohe Wärme- und Stoffaustauschzahlen.

Derartige Zyklon-Reaktoren finden Verwendung bei der Pyrolyse von Sägespänen: J. Lede, F. Verzaro, B. Antoine, J. Villermaux, "Flash Pyrolysis of Wood in a Cyclone Reactor", Chem. Eng. Proc. 20 (1986), Seiten 309-317; J. Cousins, W. Robinson, "Gasification of Sawdust in an air blown cyclone Gasifier", Ind. Eng. Chem. Process Des. Dev.24 (1985), Seiten 1281-1287; oder auch bei der Schlackenverbrennung sowie der Verbrennung von Schlammrückständen: T. Murakami et al, "Characteristics of Melting Process for Sewage Sludge", Wat. Sci, Tech. 23 (1991), Seiten 2019-2028.

Zyklone sind schließlich auch für exotherme metallurgische Prozesse, z.B. für das Erschmelzen von Kupfer-, Blei- und zinkhaltigen Kupferkonzentraten vorbeschrieben (DE 33 41 154 Al; A. Lange, "Das Schwebeschmelzen und andere leistungsintensive Prozesse, Erzmetall 13 (1960), Seiten 151-159).
Allen bisher in Zyklonen durchgeführten metallurgischen Prozessen ist jedoch gemeinsam, daß die Reaktionsstoffe als Gas- und Feststoffpartikel in den Zyklon eingebracht werden und die reduzierten Metalle den Zyklon schmelzflüssig verlassen, das heißt, am unteren Ausgang der Reaktionskammer in einem Absetzofen als Schmelze gesammelt werden.

Die Form und chemische Beschaffenheit aller an der Reaktion beteiligten Stoffe sind bestimmend für die innerhalb weiter Grenzen tatsächlich erprobten konstruktiven Ausgestaltungen und die im Zyklon praktisch angewandten Verfahrensparameter.

Entsprechend dem US-Patent 4 555 387 wird zur Herstellung von Molybdäntrioxid MoO₃ aus einer Molybdänsulfid enthaltenden Schlacke für einen Verfahrensteilschritt ein Reaktionsraum angewendet, der einem Zyklon insofern entspricht, als pulverförmiges Molybdänsulfid gemeinsam mit einem Reaktionsgas von oben in eine Reaktionskammer eingelassen werden und diese auf einer vorbestimmten Flugbahn durchlaufen. Im einzelnen werden Molybdändisulfid enthaltende Schlacke in Partikelform gemeinsam mit Sauerstoff als Reaktionsgas und mit weiteren Trägergasen in die Reaktionskammer eingelassen und dort in der sogenannten Flammenfront auf Reaktionstemperatur gebracht. Die den Reaktionsraum verlassenden Endprodukte sind flüchtiges Molybdäntrioxid, flüssige Schlacke und Restgase.

Aufgabe des Verfahrens nach vorliegender Erfindung ist die chemische Reduktion pulverförmiger Metallverbindungen, insbesondere auch der hochschmelzenden Metalle, als Feststoff-Gas-Reaktion zu pulverförmigen Endprodukten, insbesondere zu Metallpulver mit dem Ziel, die Reduktionszeiten in Reaktionskammern gegenüber dem bisher technisch realisierten Stand der Technik wesentlich zu verringern, in deren Folge die spezifischen Durchsatzzahlen (reduzierte Masse pro Zeiteinheit und Volumenseinheit dazu benötigter Reduktionsanlagen) wesentlich zu erhöhen und damit die Wirtschaftlichkeit dieser, für die pulvermetallurgische Fertigung hochschmelzender Metalle unverzichtbaren Verfahrensstufe zu steigern. Die Qualität der nach dem Verfahren hergestellten Pulver sollte dem nach bekannten Verfahren erzielbaren Standard in etwa entsprechen oder diesen übertreffen; das betrifft insbesondere auch die Pulverkornstruktur. Das Verfahren soll bedarfsweise die Möglichkeit einschließen, mehrere, nacheinander ablaufende Reaktionsschritte der Reduktion, die bisher aus Qualitäts- oder Wirtschaftlichkeitsgründen in zwei oder mehreren räumlich und/oder zeitlich getrennten Abläufen erfolgten, in einem Reaktionsraum nach- und/oder nebeneinander ablaufen zu lassen.

Die Aufgabe wird entsprechend dem Verfahren nach Anspruch 1 gelöst.

Reaktionskammern zur Durchführung des erfinderischen Verfahrens lassen sich unter dem bereits weiter vorne beschriebenen, dem Fachmann als Zyklon geläufigen Begriff zusammenfassen. Den Verfahrenabläufen in Zyklonen gemeinsam ist danach die Bewegung des zu reduzierenden Gutes und der am Verfahren beteiligten Gase auf definierten Flugbahnen in der Kammer.
Die Kammern weisen vorzugsweise rotationssymmetrische Form mit in etwa vertikaler Rotationsachse auf. Beispielsweise hat die Kammer Zylinderform, die sich nach unten wahlweise in Form eines Kegelstumpfes fortsetzt. Denkbar sind auch Kammerformen, ähnlich einem Trocknungs-Fön bzw. einem Schneckengehäuse.

Das gemäß Erfindung in Pulverform vorliegende, zu reduzierende Gut kann ein Metalloxid sein; z.B. WO₃, und wird wie dieses in einer einstufigen Reaktion zum Metallpulver reduziert.

Andere Metallverbindungen werden gemäß dem praktisch erprobten Stand der Technik über zwei oder mehr Reaktionsstufen zu Metallpulver reduziert. In diesen Fällen wird das Gut alternativ in einem ersten Zyklon unter entsprechenden Reaktionsbedingungen auf eine erste Reduktionsstufe und in einem zweiten und ggf. einem weiteren auf andere Reaktionsbedingungen adaptierten Zyklon zum Metallpulver reduziert.
Als weitere Alternative besteht die Möglichkeit, in einem einzigen Zyklon Zonen unterschiedlicher Reduktionsbedingungen zu schaffen, sodaß in einer ersten, vom zu reduzierenden Gut zu durchlaufenden Zone, eine erste Stufe der Reduktion und in einer anschließend zu durchlaufenden Zone die weitere Reduktion zu Metallpulver erfolgt.
Der Prozeß kann zur Steigerung des Reinheitsgrades des gewünschten Endproduktes in Pulverform ein- oder mehrmalig wiederholt werden.

Der Begriff "chemische Reduktion" ist in vorliegender Erfindung nicht auf die Umwandlung von Metalloxiden höherer
Oxidationsstufe zu Oxiden niedriger Oxidationsstufe beschränkt. Der Begriff "chemische Reduktion" schließt entsprechend einer erweiterten Definition jede Reaktion mit ein, bei der zumindest eines der Atome oder Ionen des zu reduzierenden Stoffes seine Oxidationszahl erniedrigt. Entsprechend können die pulverförmigen Metallverbindungen gemäß Erfindung auch in Form von Karbiden, Nitriden, Halogeniden, festen Säuren oder Metallaten, beispielsweise Ammoniumparawolframat vorliegen.

Vorbedingung für die erfindungsgemäß kurze Verfahrensdauer bei gleichzeitiger Erreichung der ausreichend vollständigen Reduktion ist, wie schon bisher, die Verwendung von Pulvern möglichst kleiner, noch wirtschaftlich herstellbarer Teilchengrößen als dem zu reduzierenden Gut. Üblich sind Korngrößen zwischen 0,1 und 10 µm.

Neben der Korngröße und Korngrößenverteilung des zu reduzierenden Gutes haben Temperatur, Strömung, Verwirbelungsgrad der Stoffe, und schließlich die geometrische Konstruktion des Reaktionsraumes selbst einen entscheidenden Einfluß auf das Verfahren und die Qualität des reduzierten Gutes. Die Optimierung dieser Parameter auf das jeweils im einzelnen angestrebte Ergebnis liegt dabei im Können des Fachmannes.

Wichtige Ausgestaltungsmerkmale des Verfahrens sind in den Unteransprüchen beschrieben.

Ein wesentlicher Vorteil des erfinderischen Verfahrens liegt in den tatsächlich erreichbaren, kurzen Verfahrens- bzw. Verweilzeiten im Reaktionsraum von 0,4 bis 60 Sekunden. Dadurch wird ein bisher nicht für möglich gehaltener spezifischer Durchsatz für das zu reduzierende Gut erreicht. Die praktisch erreichte Durchsatzzahl liegt bei 1 Tonne pro Kubikmeter Reaktionsraum und Stunde und darüber. Dieses Ergebnis war für den Fachmann nicht vorhersehbar.

Bei den bekannten Reduktionsverfahren, z.B. für hochschmelzende Metallverbindungen, ist prozeßbestimmender Schritt für die insgesamt benötigte Reduktionszeit die Wanderungs- bzw. Zutrittsgeschwindigkeit der reduzierenden Gase zur Kornoberfläche der als Schüttgut vorliegenden Pulver, sowie der Abtransport von Reaktionsgasen weg von der Pulveroberfläche. Der Fachmann konnte daher aus jenen Verfahren keinerlei verwertbare Kenntnisse erlangen, die auf eine technisch nutzbare Reduzierung gemäß Erfindung im Zeitraum von Sekunden schließen ließ. Er mußte aufgrund der vorliegenden Erfahrungen vielmehr von weit höheren Reaktionszeiten ausgehen.

Reaktion im Zyklon bedeutet systembedingt, die Verweilzeiten der Reaktionsstoffe in den Kammern liegen im Sekundenbereich.

Dementsprechend beschränken sich die bekannten, bisher im Zyklon im technischen Maßstab durchgeführten Verfahren auf Reaktionen, bei denen die entstehenden Reaktionsprodukte wegen entsprechend hoher Reaktionstemperatur als gasförmige Stoffe vorliegen, das heißt soweit feste Stoffe als zu reduzierendes Gut verarbeitet werden, sich diese verflüchtigen.
Die vollständige chemische Umsetzung eines Pulverteilchens in einer Feststoff-Gasreaktion unter Beibehaltung der festen Phase bedeutet aber ebenso systembedingt vergleichsweise lange Reaktionszeiten.
Das mußte den Fachmann eher abhalten, im vorgenannten Fall auf ein Zyklon-Verfahren zurückzugreifen. Für das Verfahren gemäß vorliegender Erfindung die jeweils geeigneten Prozeßparameter im Zyklon einzustellen, liegt aber im Rahmen handwerklicher Maßnahmen.

Ein für das erfinderische Verfahren bedeutsamer und in diesem Ausmaß unerwarteter Vorteil besteht darin, daß innerhalb eines Pulverkornes (innen, außen) während des Reduktionsvorganges unterschiedliche Phasen-Zwischenzustände auftreten, die das Korn zerplatzen lassen, die Pulveroberfläche vergrößern und damit dem reduzierenden Gas im Zyklon auf der Partikel-Flugstrecke eine kontinuierlich und rasch größer werdende Reduktions-Angriffsfläche bieten.

Der Fachmann durfte davon ausgehen, daß während der Bewegung des zu reduzierenden Gutes durch den Reaktionsraum ein Wärmeaustausch zwischen der Zyklon-Reaktionswand, dem Gas und dem pulverförmigem Gut stattfinden wird. Der tatsächlich erzielbare hohe Wärmeübergang war indes überraschend und stellte einen weiteren unerwarteten Vorteil für das Erreichen der unverzichtbaren Zielvorgabe einer weitgehend vollständigen Reduktion der Pulverteilchen im festen Zustand innerhalb der verfahrensbedingt kurzen Verweilzeiten im Reaktionsraum dar.

Neben den wirtschaftlichen Vorteilen nach dem erfinderischen Verfahren ergibt sich auch eine Qualitätsverbesserung für das danach erzielte Endprodukt. Metallpulver, gefertigt nach den heute üblicherweise verwendeten Metalloxidpulver-Reduktionsverfahren, beispielsweise im Durchstoßofen und bei den dort gegebenen Reaktionsbedingungen, weisen eine merkliche Kornvergrößerung gegenüber der ursprünglichen Pulverkörnung auf. Bei dem erfinderischen Verfahren erfolgt sogar eine bedeutsame Partikelverkleinerung, wie oben ausgeführt.

Gemäß einer bevorzugten Ausführung des erfinderischen Verfahrens wird das zu reduzierende Gut zunächst in eine erste Zone einer Reaktionskammer eingebracht, in der hohe Absolut- und hohe Relativgeschwindigkeiten für die gasförmigen und festen Pulverkomponenten zueinander bestehen. Entsprechend wird in diese Zone die Austauschgeschwindigkeit bzw. die Austauschhäufigkeit der Reaktanten an der Oberfläche des zu reduzierenden Pulvers hoch sein. Mittels entsprechender Steuerung der Gasströme sowie der Zu- und Abfuhr von Reaktionsgasen läßt sich in einer anschließenden Zone der Reaktionskammer eine nur vergleichsweise geringe Geschwindigkeit des zu reduzierenden Pulvers einstellen. Damit kommt es zu einer erwünschten höheren Restverweilzeit des zu reduzierenden Gutes in der Kammer. Denn während in der Anfangsphase der Reduktion der reduzierte Anteil im Pulverkorn vergleichsweise rasch wächst und damit ein hoher Sauerstoffaustausch über die Teilchenoberfläche stattfindet, so ist die weitere Reduktion bei schon weit fortgeschrittener Umsetzung naturgemäß verringert. Das zu reduzierende Gut befindet sich in einer Art Staurohr. Damit lassen sich selbst weitgehend reduzierte Pulver nach der Technik des erfinderischen Verfahrens in eine Phase mit sehr hohem Reduktionsanteil von beispielsweise 99 % und besser überführen.

### Beispiel 1

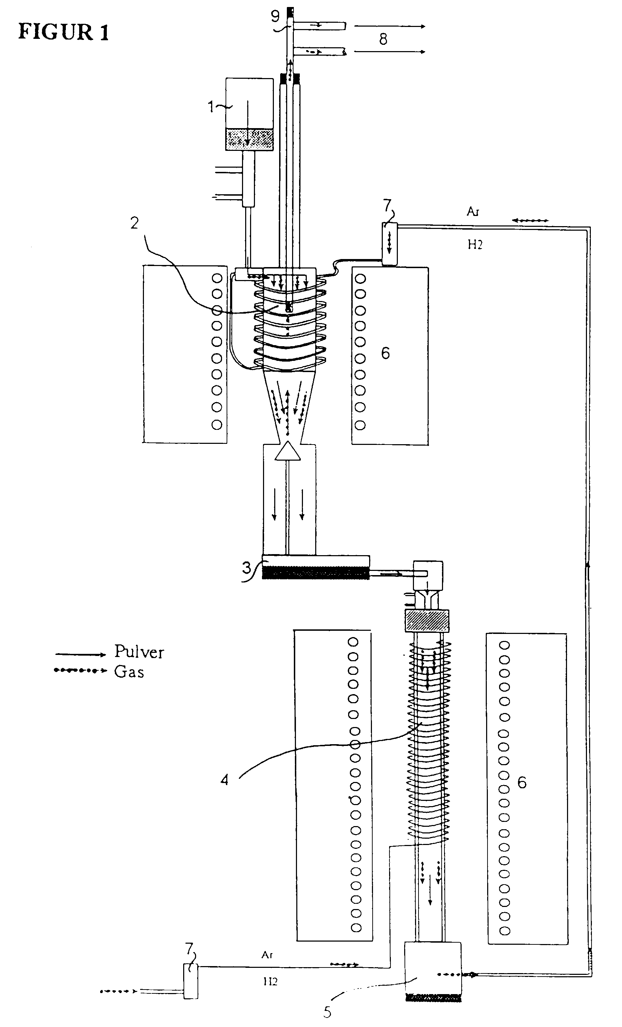

Wolframoxid blau, W₄O₁₁, wird in einem zweistufigen, kontinuierlichen Prozeß in zwei aufeinanderfolgenden Reaktionskammern, beide vom Typ her Zyklon, gemäß dem Prinzipbild von Figur 1 reduziert.
Dabei erfolgt bereits in der ersten Prozeßstufe eine Reaktion von mehr als 90 % des zu reduzierenden Gutes zu Wolfram-Metallpulver. Die auf diese Weise bei wirtschaftlicher Prozeßführung erzielbare Pulver-Reinheit, üblicherweise charakterisiert durch den Restsauerstoff-Gehalt im Metallpulver, reicht indes für viele Anwendungen der Pulvermetallurgie nicht aus. Dementsprechend wird in einem nachgeschalteten Schritt der Prozeß wiederholt, allerdings in Anpassung an die geänderten Reaktionsbedingungen (wenig Restsauerstoff) bei teilweise geänderten Prozeßparametern.

In der ersten Prozeßstufe werden W₄O₁₁, als das zu reduzierende Gut, und Reaktions/Inert-Gasgemische beim gemeinsamen Einlaß in die Reaktionskammer intensiv vermischt und durchlaufen die Kammer auf vorgegebenen Bahnen in einer turbulenten Strömung. Im Unterschied dazu werden in der zweiten Prozeßstufe das Reaktionsgas und das aus dem ersten Prozeß erhaltene Pulver getrennt derart in die Reaktionskammer eingelassen, daß Pulver und Gas die Kammer in laminarer Strömung von oben nach unten durchlaufen.

Im einzelnen wird in der ersten Prozeßstufe pulverförmiges W₄O₁₁ über eine Einspeisevorrichtung (1) gemeinsam mit einem vorgewärmten Gemisch aus H₂ und Argon in den Kopfteil einer zur Fallrichtung etwa rotationssymmetrischen Reaktionskammer (2) eingeblasen. Das Reaktions/Inert-Gasgemisch wird mittels eines Flußmeters (7) dosiert. Die Reaktionskammer besitzt eine Heizeinrichtung (6). Das pulverförmige Reaktionsprodukt verläßt die Kammer am unteren Ende, fällt in einen Vorratsraum mit Förderschnecke (3) und wird über diese in die zweite Reaktionskammer (4) mit Heizeinrichtung (6) eingeleitet. Das Abgas (8), H₂; H₂O und Inertgas, verlassen die erste Kammer an ihrem Kopfteil.
In der zweiten Prozeßstufe treten sowohl das reagierte Gut, das ist hochreines Wolframpulver, als auch die Abgase, am unteren Ende der senkrecht ausgerichteten rohrförmigen Kammer aus. Das Wolframpulver wird in einem Behälter (5) gesammelt.
Die Temperatursteuerung des gesamten zweistufigen Prozesses erfolgt mittels eines Thermoelementes (9) am Abgasauslaß der ersten Reaktionskammer.

Die Prozeßparameter der ersten Stufe sind
- Pulvermenge des zu reduzierenden Gutes W₄O₁₁ blau 700 g/h
- Reduktionsgas, einschließlich Inertgas-Anteil 6000 l/h,
- Zyklon-Kammertemperatur 1100°C
- mittlere Verweilzeit des zu reduzierenden Pulvers in der ersten Kammer 5 s
- Reduktionsrate 95 %, Sauerstoff-Restgehalt des reduzierten Gutes 9980 µg/g.

Die Prozeßparameter der zweiten Stufe sind
- Pulverdurchsatzmenge 370 g/h
- Gasmenge als Gemisch aus Reduktionsgas H₂ und Inertgas 4000 l/h
- Zyklon-Temperatur 1100°C
- Sauerstoff-Restgehalt des reduzierten Wolframpulvers 780 µg/g = 99,6% W
- mittlere Durchlaufzeit des zu reduzierenden Gutes in der zweiten Kammer 7,5 s.

## Patentansprüche

1. Verfahren zur eine oder mehrere Reaktionsstufen umfassenden chemischen Reduktion von pulverförmigen Metallverbindungen, als dem zu reduzierenden Gut, zu Metallpulver oder zu pulverförmigen Verbindungen niedrigerer Oxidationsstufe als vorbestimmtes Endprodukt, in einer temperierbaren Reaktionskammer mit Ein- und Auslaßöffnungen für das zu reduzierende Gut, für das gasförmige reduzierende Medium und wahlweise für Trägergas,
**dadurch gekennzeichnet**,
daß das zu reduzierende, pulverförmige Gut kontinuierlich in die Kammer eingebracht wird, diese unter Ablauf thermochemischer Reaktionen und unter Beibehaltung der festen Phase auf vorbestimmten Flugbahnen mit axialen, radialen und zur Kammerwand tangentialen, hohen Strömungsgeschwindigkeiten im Mittel während 0,4 bis 60 s durchläuft, wobei die Flugbahnen des zu reduzierenden Gutes über dessen Flugrichtung und Geschwindigkeit beim Einlaß und/oder mittels der Strömungsparameter des Gases beim Einlaß vorbestimmt werden und daß dabei das Gut mit mindestens 90%iger Vollständigkeit in das vorbestimmte pulverförmige Endprodukt überführt wird.

2. Verfahren zur chemischen Reduktion pulverförmiger Metallverbindungen nach Anspruch 1, dadurch gekennzeichnet, daß die Temperierung der Reaktionskammer mittels Aufheizung/Kühlung der Kammerwand von außen erfolgt.

3. Verfahren zur Reduzierung pulverförmiger Metallverbindungen nach Anspruch 1, dadurch gekennzeichnet, daß die Temperierung der Reaktionskammer mittels Aufheizen/Abkühlen eines oder mehrerer Stoffe vor dem Einlaß in die Reaktionskammer erfolgt.

4. Verfahren zur Reduzierung pulverförmiger Metallverbindungen nach Anspruch 1, dadurch gekennzeichnet, daß die Flugbahn des zu reduzierenden Gutes und die Strömung des Gases mittels rotationssymmetrischer Ausgestaltung der Reaktionskammer bezüglich einer vertikalen Rotationsachse vorgegeben werden.

5. Verfahren zur Reduzierung pulverförmiger Metallverbindungen nach Anspruch 1, dadurch gekennzeichnet, daß das eingebrachte Gut in der Reaktionskammer nacheinander einzelne Zonen unterschiedlicher Temperatur und/oder Gasströmungsparameter und/oder Reduktionsmedien und/oder Trägergase durchläuft.

6. Verfahren zur Reduzierung pulverförmiger Metallverbindungen nach Anspruch 1, dadurch gekennzeichnet, daß als zu reduzierendes Gut Metallverbindungen hochschmelzender Metalle verwendet werden.

7. Verfahren zur Reduzierung pulverförmiger Metallverbindungen nach Anspruch 1, dadurch gekennzeichnet, daß als zu reduzierendes Gut Molybdänoxid-Pulver (MoO₂) und als reduzierendes Medium H₂-Gas verwendet werden.

8. Verfahren zur Reduzierung pulverförmiger Metallverbindungen nach Anspruch 1, dadurch gekennzeichnet, daß als zu reduzierendes Gut Wolframblauoxid-Pulver (W₄O₁₁) und als reduzierendes Medium H₂-Gas verwendet werden.

9. Verfahren zur Reduzierung pulverförmiger Metallverbindungen nach Anspruch 1, dadurch gekennzeichnet, daß die mittlere Verweilzeit des zu reduzierenden Gutes in der Reaktionskammer zwischen 0,4 und 30 s liegt.

10. Verfahren zur Reduzierung pulverförmiger Metallverbindungen nach Anspruch 1, dadurch gekennzeichnet, daß die mittlere Verweilzeit des zu reduzierenden Gutes in der Reaktionskammer zwischen 0,4 und 10 s liegt.

11. Verfahren zur Reduzierung pulverförmiger Metallverbindungen nach Anspruch 1, dadurch gekennzeichnet, daß der vorbestimmte pulverförmige Reaktionszustand mit mindestens 99%iger Vollständigkeit erreicht wird.

12. Verfahren zur Reduzierung pulverförmiger Metallverbindungen nach Anspruch 8, dadurch gekennzeichnet, daß das zu reduzierende Gut in Wolfram-Metallpulver mit einem Sauerstoff-Restgehalt kleiner 1000 ppm überführt wird.

13. Verfahren zur Reduzierung pulverförmiger Metallverbindungen nach Anspruch 1, dadurch gekennzeichnet, daß Mischungen von Verbindungen verschiedener Metalle gleichzeitig reduziert werden.

## Claims

1. Method for the chemical reduction over one or more reaction stages of powdery metallic compounds, as the material to be reduced, to metal powder or to powdery compounds of lower oxidation state as the predetermined end product, in a heat-treatable reaction chamber with inlet and outlet openings for the material to be reduced, for the gaseous reducing medium and optionally for carrier gas, characterised in that the powdery material to be reduced is introduced into the chamber continuously and passes through the latter, with the occurrence of thermochemical reactions and with retention of the solid phase on predetermined air paths with high flow velocities that are axial, radial and tangential to the chamber wall, on average for 0.4 to 60 s, wherein the air paths of the material to be reduced are predetermined by the direction in air of the latter and its velocity at the inlet and/or by the flow parameters of the gas at the inlet, and that in so doing the material with at least 90% completeness is converted into the predetermined powdery end product.

2. Method for the chemical reduction of powdery metallic compounds according to claim 1, characterised in that the heat treatment of the reaction chamber takes place by the heating/cooling of the chamber wall from the outside.

3. Method for the reducing of powdery metallic compounds according to claim 1, characterised in that the heat treatment of the reaction chamber takes place by the heating/cooling of one or more materials upstream of the inlet into the reaction chamber.

4. Method for the reducing of powdery metallic compounds according to claim 1, characterised in that the air path of the material to be reduced and the flow rate of the gas are predetermined by means of rotationally symmetrical construction of the reaction chamber in relation to a vertical axis of rotation.

5. Method for the reducing of powdery metallic compounds according to claim 1, characterised in that the material introduced passes in the reaction chamber successively through individual zones with different temperature and/or gas flow parameters and/or reducing mediums and/or carrier gases.

6. Method for the reducing of powdery metallic compounds according to claim 1, characterised in that metallic compounds of high-melting metals are used as the material to be reduced.

7. Method for the reducing of powdery metallic compounds according to claim 1, characterised in that molybdenum oxide powder (MoO₂) is used as the material to be reduced and H₂ gas as the reducing medium.

8. Method for the reducing of powdery metallic compounds according to claim 1, characterised in that tungsten blue oxide powder (W₄O₁₁) is used as the material to be reduced and H₂ gas as the reducing medium.

9. Method for the reducing of powdery metallic compounds according to claim 1, characterised in that the mean residence time of the material to be reduced in the reaction chamber lies between 0.4 and 30 s.

10. Method for the reducing of powdery metallic compounds according to claim 1, characterised in that the mean residence time of the material to be reduced in the reaction chamber lies between 0.4 and 10 s.

11. Method for the reducing of powdery metallic compounds according to claim 1, characterised in that the predetermined powdery reaction state is achieved with at least 99% completeness.

12. Method for the reducing of powdery metallic compounds according to claim 8, characterised in that the material to be reduced is converted into tungsten metal powder with a residual oxygen content of less than 1000 ppm.

13. Method for the reducing of powdery metallic compounds according to claim 1, characterised in that mixtures of compounds of various metals are reduced simultaneously.

## Revendications

1. Procédé de réduction chimique, comprenant une ou plusieurs étapes de réaction, de composés métalliques pulvérulents, qui constituent la matière première à réduire, en poudres métalliques ou composés pulvérulents à moindre niveau d'oxydation qui constituent le produit final, dans une chambre de réaction à température réglable comportant des ouvertures d'admission et d'échappement pour la matière première à réduire, pour le milieu réducteur gazeux et éventuellement pour un gaz porteur, caractérisé en ce que la matière première pulvérulente à réduire est introduite en continu dans la chambre, parcourt celle-ci en moyenne pendant 0,4 à 60 s tandis que des réactions thermochimiques se déroulent et que la phase solide est maintenue sur des trajets de vol prédéterminés à des vitesses d'écoulement élevées axiales, radiales et tangentielles à la paroi de chambre, les trajets de vol de la matière première à réduire étant prédéterminés au moyen de sa direction de vol et de sa vitesse lors de l'admission et/ou au moyen des paramètres d'écoulement du gaz à l'admission, et en ce que le taux minimal de transformation de la matière première en produit final pulvérulent prédéterminé atteint 90% d'une transformation totale.

2. Procédé de réduction chimique de composés métalliques pulvérulents selon la revendication 1, caractérisé en ce que le réglage de température de la chambre de réaction est exécuté de l'extérieur par chauffage/refroidissement de la paroi de chambre.

3. Procédé de réduction chimique de composés métalliques pulvérulents selon la revendication 1, caractérisé en ce que le réglage de température de la chambre de réaction est exécuté par chauffage/refroidissement d'une ou plusieurs matières avant admission dans la chambre de réaction.

4. Procédé de réduction chimique de composés métalliques pulvérulents selon la revendication 1, caractérisé en ce que le trajet de vol de la matière première à réduire et l'écoulement du gaz sont prédéfinis au moyen d'une configuration de la chambre de réaction à symétrie de rotation par rapport à un axe vertical de rotation.

5. Procédé de réduction chimique de composés métalliques pulvérulents selon la revendication 1, caractérisé en ce que la matière première introduite dans la chambre de réaction parcourt, l'une après l'autre, des zones individuelles dans lesquelles la température et/ou des paramètres d'écoulement de gaz et/ou des agents réducteurs et/ou des gaz porteurs sont différents.

6. Procédé de réduction chimique de composés métalliques pulvérulents selon la revendication 1 caractérisé par l'utilisation de composés métalliques de métaux à haut point de fusion comme matière première à réduire.

7. Procédé de réduction chimique de composés métalliques pulvérulents selon la revendication 1 caractérisé par l'utilisation de poudre d'oxyde de molybdène (MoO₂) comme matière première à réduire et de H2 gazeux comme agent réducteur.

8. Procédé de réduction chimique de composés métalliques pulvérulents selon la revendication 1 caractérisé par l'utilisation de poudre d'oxyde bleu de tungstène (W₄O₁₁) comme matière première à réduire et de H₂ gazeux comme agent réducteur.

9. Procédé de réduction chimique de composés métalliques pulvérulents selon la revendication 1 caractérisé en ce que le temps moyen de séjour de la matière première à réduire dans la chambre de réaction est compris entre 0,4 et 30 s.

10. Procédé de réduction chimique de composés métalliques pulvérulents selon la revendication 1 caractérisé en ce que le temps moyen de séjour de la matière première à réduire dans la chambre de réaction est compris entre 0,4 et 10 s.

11. Procédé de réduction chimique de composés métalliques pulvérulents selon la revendication 1 caractérisé en ce que l'état de réaction pulvérulent prédéfini atteint au moins 90% d'un état de réaction totale.

12. Procédé de réduction chimique de composés métalliques pulvérulents selon la revendication 8 caractérisé en ce que la matière première à réduire est de la poudre de tungstène métallique à teneur résiduelle en oxygène inférieure à 1000 ppm.

13. Procédé de réduction chimique de composés métalliques pulvérulents selon la revendication 1 caractérisé en ce que des mélanges de composés de divers métaux sont réduits simultanément.
